# FASCICULE DE BREVET EUROPEEN

(11) **EP 2 783 024 B1**
(45) Date de publication et mention de la délivrance du brevet: **07.03.2018**
(21) Numéro de dépôt: 12798653.7
(22) Date de dépôt: 23.11.2012
(51) Int. Cl.: C23C 24/04, C23C 24/00, B28B 1/00, B29C 64/386, B29C 64/141

(54) **PROCEDE ET DISPOSITIF DE FORMATION D'UN DEPOT DE MATERIAU(X) FRAGILE(S) SUR UN SUBSTRAT PAR PROJECTION DE POUDRE**
VERFAHREN UND VORRICHTUNG ZUR HERSTELLUNG EINER ABLAGERUNGSSCHICHT AUS EINEM ODER MEHREREN ZERBRECHLICHEN MATERIALEN AUF EINEM SUBSTRAT DURCH BESPRÜHUNG MIT EINEM PULVER
METHOD AND DEVICE FOR FORMING A DEPOSIT OF ONE OR MORE FRAGILE MATERIALS ON A SUBSTRATE BY SPRAYING A POWDER

(30) Priorité: 25.11.2011 FR 1160790
(43) Date de publication de la demande: 01.10.2014
(73) Titulaire: Centre de Transfert de Technologies Ceramiques (C.T.T.C.), 87069 Limoges (FR)
(72) Inventeur: ETCHEGOYEN, Gregory, 87240 Ambazac (FR); DURAND, Olivier, 87350 Panazol (FR); ROSSIGNOL, Fabrice, 87430 Verneuil Sur Vienne (FR)
(74) Mandataire: Ipside
(86) Numéro de dépôt international: PCT/EP2012/073456
(87) Numéro de publication internationale: WO 2013/076239

(56) Documents cités:
- US-A1- 2004 197 493
- US-A1- 2005 211 162
- JAWOREK A ET AL: "Trajectories of charged aerosol particles near a spherical collector", JOURNAL OF ELECTROSTATICS, ELSEVIER SCIENCE PUBLISHERS B.V. AMSTERDAM, NL, vol. 51-52, 1 mai 2001 (2001-05-01), pages 603-609, XP004341130, ISSN: 0304-3886, DOI: 10.1016/S0304-3886(01)00062-6

## Description

### DOMAINE DE L'INVENTION

La présente invention concerne un procédé et un dispositif de formation d'un dépôt d'une poudre d'un matériau fragile sur un substrat.

### ARRIERE PLAN DE L'INVENTION

La technique dite ADM (acronyme du terme anglo-saxon « Aerosol Deposition Method » ou méthode de dépôt par aérosol) présente plusieurs avantages dans la formation de dépôts de céramiques ou autres matériaux fragiles.

L'article de Jun Akedo, « Room Temperature Impact Consolidation of Fine Ceramic Powder by Aerosol Deposition Method and Applications to Microdevices », Journal of Thermal Spray Technology, Vol. 17(2), Juin 2008, pp. 181-198, décrit ce procédé et les applications envisagées.

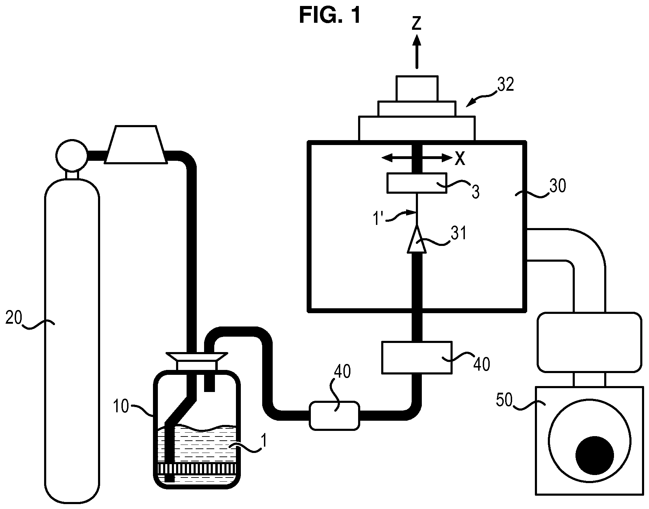

La figure 1 illustre un dispositif connu permettant la mise en oeuvre de cette technique. Le dispositif comprend une chambre d'aérosol 10 qui contient une poudre céramique 1.

La chambre d'aérosol 10 est liée à un dispositif 20 d'alimentation en gaz qui permet d'injecter ledit gaz dans la chambre 10 en vue de le mélanger avec la poudre céramique 1.

Par ailleurs, un dispositif vibratoire (non représenté) est configuré de sorte à faire vibrer la chambre 10 contenant le mélange de gaz et de poudre céramique de manière appropriée pour générer un aérosol.

Ledit aérosol est alors injecté dans une chambre de dépôt 30 par l'intermédiaire d'une buse 31.

Eventuellement, un ou plusieurs filtres 40 peuvent être placés sur le parcours de l'aérosol entre la chambre 10 où il est généré et la chambre 30 de dépôt, de manière à retenir ou sélectionner les grains présentant la granulométrie désirée.

A l'intérieur de la chambre 30 de dépôt est agencé un substrat 3 sur lequel la poudre céramique doit être déposée.

Le substrat 3 est maintenu par un support 32 qui est mobile en translation dans la chambre, permettant ainsi de déplacer le substrat 3 par rapport à la buse 31.

Lors de l'injection de l'aérosol, on fait le vide dans la chambre 30 de dépôt grâce à un système de pompage 50.

Les grains de poudre céramique contenus dans l'aérosol sont accélérés par la buse 31 et traversent l'espace séparant la sortie de la buse 31 du substrat 3 avec une énergie cinétique élevée (le flux de l'aérosol est représenté par le repère 1').

En entrant en contact avec le substrat 3, les grains de poudre se fragmentent et forment localement un dépôt cohésif.

Cette cohésion est directement induite par l'énergie libérée au moment de l'impact sans qu'il soit nécessaire de procéder ensuite à un frittage.

Ainsi, en déplaçant le substrat 3 par rapport à la buse 31, on peut former un dépôt céramique à la surface du substrat 3 sans qu'un traitement thermique ne soit requis.

Ce procédé présente de multiples avantages.

D'une part, le dépôt de matériau fragile obtenu présente une cohésion mécanique suffisante pour ne pas nécessiter de frittage, par opposition aux procédés connus mettant en oeuvre par exemple des poudres céramiques, qui nécessitent un frittage à température élevée pour conférer au dépôt les propriétés mécaniques requises (dureté, cohésion).

Le procédé étant mis en oeuvre à température ambiante, le dépôt d'un matériau fragile peut être effectué sur tout type de substrat, incluant des substrats ne résistant pas à une température élevée et qui ne peuvent donc pas être utilisés dans les procédés impliquant un frittage à haute température.

Les applications de ce procédé sont donc très nombreuses.

Les dispositifs connus permettent d'obtenir des dépôts continus à la surface du substrat, c'est-à-dire un dépôt dont la surface est d'un seul tenant et qui présente le plus souvent des bords rectilignes.

En effet, la surface du substrat sur laquelle le dépôt est déposé est généralement plane, et les dispositifs procurent généralement un déplacement relatif du substrat par rapport à la buse selon un ou deux axes orthogonaux dans un plan perpendiculaire à la direction du flux 1' d'aérosol.

On pourra par exemple se référer au document US 6,531,187.

En particulier, le dépôt se fait par un balayage par la buse de la surface du substrat, la buse parcourant des lignes parallèles successives jusqu'à la couverture de la surface souhaitée.

Ce mode de dépôt est décrit par exemple dans le document US 2011/0070359. Le document US2005/0211132 décrit la réalisation d'un dépôt par aérosol dans une chambre de déposition assisté par un module de calcul qui garantie l'épaisseur des couches. Le document US 2006/0222862 envisage quant à lui la réalisation d'un dépôt à la surface d'un objet en relief, la buse étant alors placée à l'extrémité d'un bras commandé par ordinateur qui permet de suivre la surface de l'objet en maintenant la buse à une distance constante de la surface.

Il s'agit également d'un dépôt réalisé de manière continue sur la surface de l'objet.

Cependant, se pose le problème de déposer un dépôt discontinu à la surface du substrat, c'est-à-dire un dépôt réparti selon un motif prédéfini (par exemple, une spirale) et/ou constitué de plusieurs motifs distincts (par exemple, plusieurs disques) sur la surface du substrat.

Il est connu, notamment par l'article cité plus haut et par le document US 7,479,464, de placer entre la buse et le substrat un masque dont les ouvertures définissent le motif souhaité.

Cependant, l'emploi d'un tel masque est délicat d'une part car les bords des ouvertures dudit masque peuvent dévier le flux de l'aérosol, ce qui peut conduire à une érosion du substrat plutôt qu'à la formation du dépôt.

Ceci impose de régler très finement les paramètres du flux de l'aérosol, notamment la dépression dans la chambre de dépôt, l'angle d'incidence du flux de l'aérosol.

D'autre part, les masques connus ne permettent pas de réaliser des dépôts selon des motifs plus complexes, tels qu'une spirale par exemple.

Par ailleurs, si l'on souhaite former un motif dont les dimensions dans un plan parallèle à la surface du substrat varient en fonction de l'épaisseur (par exemple, un motif dont la section dans un plan perpendiculaire à la surface du substrat est trapézoïdale ou triangulaire), il est nécessaire d'employer successivement plusieurs masques dont les ouvertures sont de plus en plus étroites.

Compte tenu de la finesse des dépôts obtenus, la gestion de ces différents masques serait particulièrement complexe pour obtenir la section souhaitée.

En tout état de cause, cette technique de masquage semble particulièrement difficile à mettre en oeuvre sur un substrat dont la surface n'est pas plane.

Un but de l'invention est donc de concevoir un procédé de dépôt d'une poudre d'un matériau fragile sur un substrat qui permette de former un dépôt constitué d'un ou plusieurs motifs prédéfinis, sans avoir recourt à un masque, qui imposerait des coûts et délais de fabrication supplémentaires.

Un autre but de l'invention est de proposer un procédé de dépôt d'une poudre d'un matériau fragile sur un substrat qui permette de former un dépôt dont les dimensions varient sur l'épaisseur du dépôt, sans avoir recourt à plusieurs masques successifs dont les coûts de fabrication sont élevés et les durées de vie sont faibles.

En d'autres termes, un but de l'invention est d'offrir davantage de flexibilité en ce qui concerne la géométrie du dépôt que les procédés actuels utilisant des masques.

### BREVE DESCRIPTION DE L'INVENTION

Conformément à l'invention, telle qu'est décrit dans la revendication 1, il est proposé un procédé de formation d'un dépôt d'un matériau fragile sur un substrat par projection d'une poudre dudit matériau, ledit procédé comprenant les étapes suivantes :
- la génération d'un aérosol contenant ladite poudre dans une chambre dite d'aérosol,
- l'accélération de l'aérosol à travers une buse, dans une chambre dite de dépôt en dépression par rapport à la chambre d'aérosol,
- la projection de l'aérosol sur le substrat, les grains constituant la poudre se fragmentant et formant ledit dépôt lors de l'impact sur le substrat,
ledit procédé étant caractérisé en ce que l'on pilote la formation du dépôt à partir d'un modèle numérique tridimensionnel dudit dépôt à former, mis en oeuvre par tout logiciel de conception assisté par ordinateur. Grâce à ce pilotage, on peut construire toute forme de dépôt, quelle que soit l'évolution de son épaisseur.

Par « dépôt » on entend dans le contexte de la présente invention une entité matérielle résultant de la fragmentation et de la cohésion de la poudre projetée sur le substrat. Le dépôt peut ainsi consister en une couche fine continue, ou en des motifs discrets à la surface du substrat.

On entend par « modèle numérique tridimensionnel » d'un objet une représentation en trois dimensions de l'objet sous une forme adaptée à son utilisation par un calculateur numérique tel qu'un ordinateur, par exemple en vue de fabriquer l'objet par un équipement de fabrication assistée par ordinateur (FAO). Typiquement, ce modèle numérique tridimensionnel peut être généré, préalablement à la mise en oeuvre du procédé de fabrication, au moyen d'un logiciel de conception assistée par ordinateur (CAO).

Par « matériau fragile », on entend dans le présent texte un matériau caractérisé par une rupture fragile, c'est-à-dire sans déformation plastique préalable, au cours d'un chargement élastique, et dès que la contrainte atteint localement le seuil critique de décohésion interatomique. On pourra à cet égard se référer à l'ouvrage de P. Boch, "Propriétés et applications des céramiques", collection Mécanique et Ingénierie des Matériaux, Hermès Science Publications, 2001, ISBN 2-7462-0192-5.

Les poudres céramiques se prêtent notamment bien à ce procédé.

Par exemple et de manière non limitative, le procédé peut être mis en oeuvre avec une poudre comprenant un matériau fragile choisi parmi l'oxyde d'aluminium, l'oxyde de zirconium, l'oxyde de silicium, l'oxyde de titane, l'oxyde de magnésium, l'oxyde de zinc, l'oxyde de fer, les oxydes de terres rares, l'oxyde de béryllium, l'oxyde de vanadium, l'oxyde de niobium, l'oxyde de tellure, l'oxyde de tungstène, l'oxyde de calcium, l'oxyde de cuivre, l'oxyde d'hafnium, l'oxyde mixte de calcium, cuivre et titane, l'oxyde mixte d'étain et d'indium, l'oxyde mixte d'aluminium et de magnésium, le titanate de baryum, le titanate de calcium, le titanate de strontium, le carbure de silicium, le carbure de titane, le carbure de tungstène, le carbure de bore, le carbure mixte de silicium et de titane, le carbure mixte d'aluminium et de titane,, le nitrure d'aluminium. le nitrure de silicium, le nitrure de titane, le nitrure de bore, le nitrure mixte d'aluminium et de titane, les oxynitrures d'aluminium et de silicium (dopés ou non), l'hydroxyapatite, le phosphate tricalcique, le carbonate de magnésium, le carbonate de calcium, le carbonate de baryum, le silicate de magnésium, les aluminosilicates. Le procède de formation dudit dépôt de l'invention comprendre de façon additionnelle les étapes suivantes :
- à partir d'un modèle numérique tridimensionnel du dépôt à former, la décomposition dudit modèle numérique en une pluralité de couches élémentaires à déposer successivement ;
- le calcul d'une pluralité de trajectoires relatives de la buse et du substrat permettant de reproduire chacune des couches élémentaires à déposer ;
- le recouvrement successif des couches élémentaires pour obtenir l'épaisseur de dépôt souhaitée.

L'épaisseur desdites couches élémentaires à déposer peut être définie en particulier en fonction des dimensions de l'impact du flux d'aérosol sur le substrat, de la vitesse de croissance de l'épaisseur du dépôt et de la vitesse de déplacement relative de la buse par rapport au substrat sur la trajectoire calculée pour déposer ladite couche élémentaire.

De manière particulièrement avantageuse, l'aérosol est généré continument pendant la formation du dépôt.

Cependant, on peut empêcher temporairement le flux d'aérosol de frapper le substrat.

Ainsi, selon un mode de réalisation de l'invention, le dépôt est constitué de plusieurs motifs distincts et, pendant la trajectoire reliant deux motifs consécutifs, on dévie l'aérosol hors de la chambre de dépôt.

Selon un autre mode de réalisation, le dépôt est formé de plusieurs motifs distincts et, pendant la trajectoire reliant deux motifs consécutifs, on projette l'aérosol sur un écran interposé de façon dynamique entre la buse et le substrat.

Par « interposé de façon dynamique » on entend ici que l'écran est mobile avec la buse.

Selon un autre mode de réalisation de l'invention, le dépôt est formé de plusieurs motifs distincts et, pendant la trajectoire reliant deux motifs consécutifs, on accélère le déplacement relatif de la buse et du substrat.

Dans une forme particulière d'exécution de l'invention, les couches élémentaires du dépôt sont réalisées successivement par une ou plusieurs buses disposées les unes à côté des autres.

On peut également projeter alternativement ou simultanément sur un ou plusieurs substrats un ou plusieurs aérosols de plusieurs poudres différentes.

Le diamètre des grains de la poudre est typiquement compris entre 0,5 et 30 µm.

Un autre objet de l'invention concerne un dispositif de formation d'un dépôt d'un matériau fragile sur un substrat par projection d'une poudre dudit matériau, comprenant un dispositif de projection d'un aérosol contenant ladite poudre sur ledit substrat, ledit dispositif de projection comprenant un dispositif de génération dudit aérosol et une chambre de dépôt comprenant un support pour le substrat et une buse pour projeter ledit aérosol sur le substrat, ledit dispositif étant caractérisé en ce qu'il comprend un dispositif de pilotage comprenant :
o des moyens de déplacement solidaires de la buse et/ou du support du substrat, adaptés pour générer des déplacements de la buse et/ou du support de manière indépendante selon trois directions orthogonales (X, Y, Z) et deux axes de rotations (θ, ε) ;
o une unité de traitement adaptée pour, à partir d'un modèle numérique tridimensionnel du dépôt à former, commander lesdits moyens de déplacement.

De manière préférée, ladite unité de traitement comprend :
o un module de calcul, à partir dudit modèle numérique tridimensionnel, de la décomposition du dépôt à former en une pluralité de couches élémentaires empilées ;
o un module de détermination d'une pluralité de trajectoires tridimensionnelles de projection de l'aérosol, pour chaque couche élémentaire ;
o un module d'établissement d'un ensemble de paramètres de projection de l'aérosol pour chaque trajectoire tridimensionnelle ;
o un module de commande desdits moyens de déplacements tridimensionnels indépendants et dudit dispositif de projection de l'aérosol.

Par ailleurs, ledit dispositif comprend avantageusement un moyen pour empêcher temporairement le flux d'aérosol de frapper le substrat.

Ledit moyen peut comprendre un écran adapté pour être temporairement interposé entre la buse et le substrat.

De manière alternative, ledit moyen comprend un dispositif de dérivation pour dévier le flux d'aérosol vers une chambre de dépôt additionnelle.

### BREVE DESCRIPTION DES DESSINS

D'autres caractéristiques et avantages de l'invention ressortiront de la description détaillée qui va suivre, en référence aux dessins annexés sur lesquels :
- la figure 1 est un schéma d'ensemble d'un dispositif de formation d'un dépôt par aérosol connu,
- la figure 2 est un schéma d'ensemble d'un mode de réalisation du dispositif selon l'invention,
- la figure 3 est un schéma détaillant les axes de déplacement du support du substrat et de la buse,
- la figure 4 est un schéma représentant les paramètres nécessaires au calcul de l'épaisseur des couches successives à empiler pour fabriquer le dépôt,
- la figure 5 est un schéma détaillant l'exemple d'un dépôt en spirale selon le plan X, Y et de faible épaisseur en Z,
- la figure 6 est un schéma détaillant l'exemple d'un dépôt parallélépipédique selon X, Y, Z, avec une géométrie rectangulaire dans le plan X, Y, une géométrie trapézoïdale dans le plan X, Z et Y, Z,
- la figure 7 est un schéma détaillant l'exemple d'un dépôt rectiligne de faible largeur sur un substrat non plan.

### DESCRIPTION DETAILLEE DE MODES DE REALISATION DE L'INVENTION

### Dispositif de projection

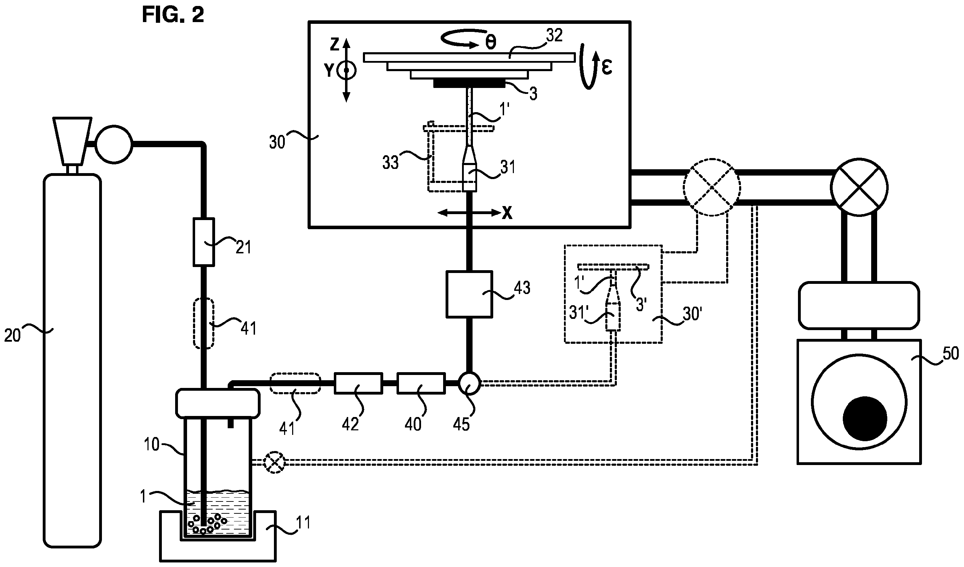

En référence à la figure 2, le dispositif de projection comprend une chambre d'aérosol 10 qui contient une poudre 1 d'un matériau fragile et un dispositif d'alimentation 20 en gaz non réactif de la chambre d'aérosol 10.

La chambre d'aérosol 10 est reliée au dispositif 20 d'alimentation en gaz, qui permet d'injecter ledit gaz dans la chambre 10 en vue de le mélanger avec la poudre 1 d'un matériau fragile.

Le gaz non réactif est choisi de préférence parmi l'azote, l'hélium, l'argon, l'air et/ou un mélange d'au moins deux de ces gaz.

Le dispositif d'alimentation en gaz 20 comprend un dispositif 21 de contrôle et de régulation du débit du gaz non réactif avec la poudre 1 d'un matériau fragile.

Les valeurs de débit sont typiquement comprises entre 0 et 30 L/min.

Par ailleurs, un dispositif 11 de mise en mouvement de la chambre d'aérosol 10 est configuré de sorte à homogénéiser le mélange de gaz et de poudre d'un matériau fragile dans la chambre d'aérosol 10, de manière appropriée pour générer un aérosol 1'.

La mise en mouvement de la chambre d'aérosol 10 est effectuée par exemple par vibrations, rotations ou centrifugation.

Le dispositif de projection comprend en outre une chambre de dépôt 30 contenant le substrat 3 devant recevoir le dépôt à réaliser et la buse 31 au travers de laquelle le flux d'aérosol est projeté sur ledit substrat 3.

A cet effet, la chambre 30 comprend un support 32 pour le substrat.

Le substrat est maintenu sur le support par un système de préhension permettant de garantir son immobilisation totale lors de la réalisation du dépôt et son retrait rapide une fois le dépôt réalisé.

Ledit système de préhension comprend par exemple des pièces, des cales ou des aimants.

Comme on le verra plus bas, ledit support 32 peut être déplacé en translation et/ou en rotation pour permettre la formation d'un dépôt selon un motif déterminé sur le substrat.

L'aérosol sec 1' produit dans la chambre d'aérosol 10 est injecté dans la chambre de dépôt 30 par l'intermédiaire d'une buse 31 qui est mobile par rapport au substrat 3, à l'intérieur de la chambre de dépôt 30.

Comme on le verra plus bas, la buse 31 est de préférence mobile en translation selon un ou deux axes, le support du substrat étant quant à lui mobile en translation et/ou en rotation de telle sorte que l'on puisse former un dépôt sur le substrat, quelle que soit sa géométrie et la variation de celle-ci selon l'épaisseur du dépôt.

De manière optionnelle mais avantageuse, le dispositif de projection comprend également des moyens pour traiter l'aérosol en fonction de la sélection granulaire de la charge en matière sèche et de la quantité d'humidité qu'il contient.

Ainsi, un dispositif de dessiccation 41 peut être placé soit entre le dispositif 20 d'alimentation en gaz et la chambre d'aérosol 10, soit dans la chambre d'aérosol 10 uniquement, soit entre la chambre d'aérosol 10 et la chambre de dépôt 30.

Grâce à ce dispositif de dessiccation 41, l'aérosol produit dans la chambre d'aérosol 10 et circulant jusqu'à la chambre de dépôt 30, est un aérosol sec 1'.

Ainsi la charge solide de l'aérosol ne s'agglomère pas et ne colmate pas les différents organes du dispositif de projection.

Par ailleurs, un dispositif de sélection granulaire 42 peut être placé entre la chambre d'aérosol 10 et la chambre de dépôt 30, afin de ne sélectionner que les grains de la poudre 1 qui ont la taille nécessaire pour être projetés sur le substrat 3.

Le diamètre des grains de la poudre 1 pouvant être projetés sur le substrat 3 est généralement compris entre 0,5 µm et 30 µm.

En plus de ce dispositif de sélection granulaire 42, un ou plusieurs filtres 40 peuvent être placés entre la chambre d'aérosol 10 et la chambre de dépôt 30.

Ces filtres 40 permettent également de sélectionner les grains dont la taille est comprise entre 0,5 µm et 30 µm.

Par ailleurs, un dispositif 43 de contrôle de la charge de l'aérosol peut être placé entre la chambre d'aérosol 10 et la chambre de dépôt 30 pour mesurer en temps réel et réguler la quantité de poudre qui est projetée sur le substrat 3.

Ce dispositif 43 est par exemple constitué d'un tube transparent, dans lequel l'aérosol provenant de la chambre d'aérosol 10 circule vers la chambre de dépôt 30, et est traversé par un faisceau laser, qui est récupéré par un détecteur.

Ce dispositif 43 permet de connaître la distribution granulométrique des grains de poudre de l'aérosol sec ainsi que la charge massique de l'aérosol, exprimée en mg/cm³, provenant de la chambre d'aérosol 10 et se dirigeant vers la chambre de dépôt 30.

Un système de pompage 50 est relié à la chambre de dépôt 30 par une liaison fluidique. Ledit système 50 permet de faire le vide à l'intérieur de la chambre de dépôt 30.

Ledit système 50 comprend une pompe primaire et une turbopompe permettant d'atteindre des pressions absolues dans la chambre de dépôt 30 comprises entre 10 Pa et 1000 Pa.

De plus, ledit système 50 peut être relié par une liaison fluidique à la chambre d'aérosol 10, permettant ainsi de faire le vide également à l'intérieur de la chambre d'aérosol 10.

Ainsi on peut par exemple contrôler et réguler la différence de pression entre la chambre d'aérosol 10 et la chambre de dépôt 30.

En tout état de cause, la chambre de dépôt 30 est en dépression par rapport à la chambre d'aérosol pendant la formation du dépôt.

Ledit système 50 permet de maintenir le vide lors de l'injection de l'aérosol dans la chambre de dépôt 30 au travers de la buse 31.

La pression atteinte dans la chambre de dépôt 30, lorsque le flux d'aérosol est injecté, est de préférence comprise entre 10 et 1000 Pa.

Le dispositif de formation d'un dépôt d'une poudre d'un matériau fragile qui vient d'être décrit est par ailleurs adaptable en vue de former des dépôts multi-matériaux et/ou multi-buses sur un même substrat ou sur des substrats différents disposés sur le même support 32.

Ainsi, selon un mode de réalisation non illustré, plusieurs chambres d'aérosol peuvent être disposées en parallèle, de manière à alimenter plusieurs buses, chacune des buses permettant de projeter un flux d'aérosol d'une poudre d'un matériau fragile.

Un exemple de configuration (non illustré) est la projection de la même poudre d'un matériau fragile à travers plusieurs buses alimentées par plusieurs aérosols provenant de plusieurs chambres d'aérosol contenant la même poudre

Un autre exemple de configuration (non illustré) est la projection de plusieurs poudres différentes de plusieurs matériaux fragiles à travers plusieurs buses alimentées par plusieurs aérosols provenant de plusieurs chambres d'aérosols contenant chacune une poudre différente.

### Dispositif de pilotage de la formation du dépôt

Pour projeter l'aérosol sur un substrat - plan ou non plan - via une buse de projection selon un motif déterminé, le dispositif comprend en outre des moyens de déplacements tridimensionnels de la buse et/ou du support du substrat, indépendants selon trois directions de référence et deux axes de rotation indépendants.

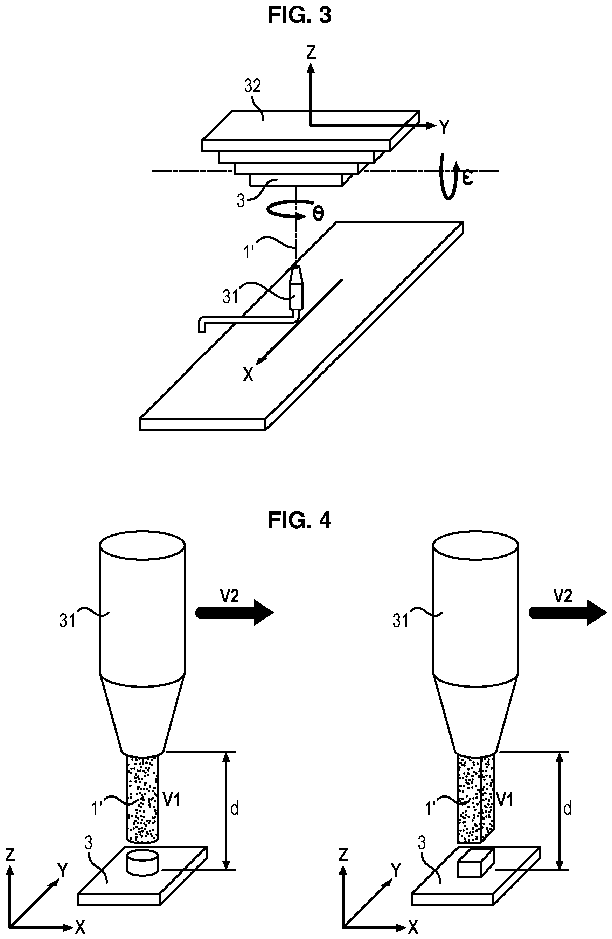

Comme illustré à la figure 3, on définit un repère orthogonal X, Y, Z dans lequel les axes X et Y sont perpendiculaires dans le plan horizontal et l'axe Z est dans le plan vertical (correspondant généralement à l'orientation de la buse).

On définit également deux angles de rotation : l'angle θ correspondant à une rotation autour de l'axe vertical Z et l'angle ε correspondant à une rotation autour de l'axe horizontal Y.

Des moyens de déplacement appropriés permettent de générer de manière indépendante des déplacements de la buse et du support du substrat.

De manière avantageuse mais non limitative, la buse 31 est solidaire d'un moyen de déplacement motorisé permettant de translater la buse selon l'axe X.

Par ailleurs, le support 32 du substrat est solidaire de deux moyens motorisés permettant respectivement une translation selon l'axe Y et une translation selon l'axe Z et de deux moyens motorisés de rotation selon θ et ε.

Le dispositif de pilotage comprend de préférence également une unité de traitement d'informations permettant d'asservir le déplacement de la buse 31 par rapport à la surface du substrat ou, inversement, de la surface du substrat par rapport à la buse 31, de sorte que, même lorsque le substrat n'est pas plan, le flux d'aérosol soit toujours perpendiculaire à la surface du substrat au point d'impact et à distance constante de celle-ci.

Ce maintien de la perpendicularité de l'incidence de l'aérosol permet d'assurer la qualité du dépôt, notamment en ce qui concerne la précision du motif et la cohésion des grains.

Selon le motif du dépôt à former sur le substrat, on peut ainsi combiner les mouvements de la buse et du support du substrat pour conférer au flux d'aérosol la trajectoire adéquate.

Il n'est pas toujours nécessaire d'effectuer des déplacements selon tous les degrés de liberté possibles ; en effet, pour former un dépôt selon un motif simple (par exemple une bande rectiligne), seuls quelques-uns des différents déplacements possibles peuvent s'avérer suffisants.

Ainsi, et de manière non limitative, on peut citer les exemples suivants :
- la buse 31 est en mouvement selon l'axe X et le support 32 portant le substrat 3 est fixe selon Y et/ou selon Z et/ou selon θ et/ou selon ε ;
- la buse 31 est fixe selon l'axe X et le support 32 portant le substrat 3 est en mouvement selon Y et/ou selon Z et/ou selon θ et/ou selon ε ;
- la buse 31 est en mouvement selon l'axe X et le support 32 portant le substrat 3 est en mouvement selon Y et/ou selon Z et/ou selon θ et/ou selon ε.

Il serait bien sûr possible de doter la buse de davantage de degrés de liberté et, en contrepartie, de procurer au support du substrat moins de degrés de liberté.

Dans le cas de configurations multi-buses mentionné plus haut, lesdites buses sont avantageusement mobiles en translation selon la direction X, par rapport au substrat 3, et le support 32 du substrat 3 est mobile en translation selon les directions Y, Z et/ou en rotation θ, ε par rapport aux buses 31.

Les vitesses de déplacement du support 32 et de la buse 31 sont comprises entre 0,010mm/s et 100mm/s, préférentiellement entre 0,125 mm/s et 10 mm/s.

Par ailleurs, l'unité de traitement des informations comprise dans le dispositif de pilotage est également destinée à commander les moyens de déplacements mentionnés ci-dessus en fonction de la géométrie tridimensionnelle du dépôt à former sur le substrat 3 et la géométrie tridimensionnelle du substrat 3 à revêtir.

A cet effet, ladite unité de traitement comprend un module de calcul, à partir du modèle tridimensionnel du dépôt et du substrat si nécessaire, de la décomposition en une pluralité de couches élémentaires empilées, lesdites couches élémentaires étant de préférence d'égale épaisseur.

L'unité de traitement comprend en outre un module de détermination d'une pluralité de trajectoires tridimensionnelles de projection de l'aérosol, pour chaque couche élémentaire.

Par trajectoire tridimensionnelle, on entend la trajectoire relative de la buse 31 par rapport au substrat 3.

L'unité de traitement comprend également un module d'établissement d'un ensemble de paramètres de projection de l'aérosol (incluant notamment mais de manière non limitative le débit de gaz, la distance buse-substrat, les vitesses de déplacements, la section de sortie de la buse, la distribution granulométrique, la charge de l'aérosol...) pour chaque trajectoire tridimensionnelle.

L'unité de traitement comprend également un module de commande des moyens de déplacements tridimensionnels indépendants et des moyens de génération et de projection de l'aérosol.

Enfin, le dispositif de pilotage peut comprendre des moyens de mesure des déplacements tridimensionnels et des paramètres de projection, raccordés à l'unité de traitement, et qui permettent de contrôler que les trajectoires et paramètres de projection sont conformes aux trajectoires et paramètres déterminés.

De manière particulièrement avantageuse, le dispositif de pilotage est en outre adapté pour interrompre temporairement la formation du dépôt sur le substrat sans pour autant interrompre la génération de l'aérosol.

Ce dispositif d'interruption du dépôt est particulièrement avantageux lorsque le dépôt ne forme pas un motif continu, par exemple lorsqu'il se présente sous la forme d'une pluralité de surfaces distantes les unes des autres.

En effet, la génération et l'interruption de l'aérosol ne sont pas instantanées.

Arrêter temporairement la génération de l'aérosol au cours de la formation du dépôt est donc pénalisant.

Le dispositif de pilotage comprend donc de préférence un moyen pour, tout en générant continument l'aérosol, empêcher temporairement le flux d'aérosol de frapper le substrat, et ce de manière synchronisée avec les moyens de déplacements de la buse 31 et du support 32 portant le substrat 3, selon les trajectoires déterminées par le module de calcul.

Selon un mode de réalisation, ce moyen comprend un écran de masquage dynamique 33 (visible à la figure 2) adapté pour être placé temporairement entre la buse 31 et le substrat 3.

Cet écran de masquage dynamique 33 est par exemple constitué d'un objet plan (disque, plaque, lame...) qui peut être amené, par exemple au moyen d'un bras articulé, dans un plan perpendiculaire au flux d'aérosol 1' sortant de la buse 31, entre la buse 31 et le substrat 3.

Selon une variante (non illustrée), ledit écran de masquage dynamique 33 peut être par exemple évidé afin de présenter des orifices de géométries particulières afin de ne laisser passer qu'une partie du flux d'aérosol si besoin.

Ledit écran de masquage dynamique évidé permet ainsi de définir la géométrie bidimensionnelle du flux d'aérosol projeté sur le substrat.

Ledit écran de masquage dynamique évidé est alors mobile avec la buse.

Un autre moyen pour interrompre le flux d'aérosol 1' sur le substrat 3 comprend par exemple un dispositif 45 de dérivation du flux d'aérosol, placé entre la chambre d'aérosol 10 et la chambre de dépôt 30.

Ledit dispositif de dérivation 45 permet de dévier le flux d'aérosol 1' circulant entre la chambre d'aérosol 10 et la chambre de dépôt 30 vers une chambre de dépôt additionnelle 30'.

Un tel dispositif de dérivation 45 et la chambre de dépôt additionnelle 30' sont représentés également à la figure 2, mais il va de soi que l'écran 33 et le dispositif de dérivation 45 sont des moyens alternatifs pour interrompre temporairement la formation du dépôt et qu'il n'est donc pas nécessaire de les combiner.

Ladite chambre de dépôt additionnelle 30' peut être reliée au système de pompage 50 par une liaison fluidique.

Le système de pompage 50 permet ainsi d'atteindre les mêmes valeurs de pression dans la chambre additionnelle 30' que dans la chambre de dépôt 30.

Ladite chambre additionnelle 30' contient une buse 31' permettant de projeter le flux d'aérosol 1' sur un substrat 3' sacrificiel.

L'objectif de cette dérivation du flux d'aérosol n'est pas de former un dépôt déterminé sur le substrat sacrificiel 3' mais d'empêcher temporairement l'impact de grains de poudre sur le substrat 3 dans la chambre de dépôt 30.

La mise en place et le retrait de l'écran 33 ou la mise en oeuvre et l'arrêt de la dérivation par le dispositif 45 peuvent être réalisés de manière pratiquement instantanée, bien plus rapide qu'une interruption et une reprise de la génération de l'aérosol.

De manière alternative, les moyens de déplacement de la buse et/ou du support du substrat peuvent être accélérés, de sorte que le dépôt formé sur le substrat sur la surface parcourue pendant cette accélération soit négligeable par rapport au dépôt formé intentionnellement.

### Procédé de formation du dépôt

La formation d'un dépôt à la surface d'un substrat comprend les étapes suivantes.

On part d'un modèle numérique tridimensionnel du dépôt D positionné sur le substrat, celui-ci pouvant être plan ou non plan.

La réalisation de ce modèle peut être mise en oeuvre par tout logiciel de conception assistée par ordinateur, en un format qui soit compatible avec l'unité de traitement.

On découpe le volume géométrique du dépôt en une pluralité de couches élémentaires d'égales épaisseurs.

L'épaisseur des couches élémentaires est elle-même calculée à partir de la quantité de matière déposée en un seul passage sur l'ensemble de la surface à revêtir.

En référence à la figure 4, ladite quantité de matière est calculée à partir :
- des dimensions dans le plan (X, Y) de l'impact du faisceau d'aérosol sur le substrat 3 (celui-ci pouvant être circulaire, comme sur la figure de gauche, ou rectangulaire, comme sur la figure de droite, selon la géométrie de la buse).
- de la vitesse de croissance en épaisseur (notée V1) du dépôt selon l'axe Z,
- de la vitesse de déplacement du flux d'aérosol (notée V2) dans une direction parallèle au substrat, ladite vitesse de déplacement correspondant à la vitesse relative de la buse par rapport au substrat.

On calcule ensuite les trajectoires relatives de la buse 31 et du substrat 3 pour construire chaque couche élémentaire du dépôt correctement positionné sur le substrat.

Les trajectoires peuvent être continues, permettant de construire un motif continu, comme par exemple un segment.

Les trajectoires peuvent également être discontinues, permettant de construire un motif discontinu, comme par exemple des pointillés.

Le cas échéant, on synchronise lesdites trajectoires calculées avec un arrêt temporaire du flux d'aérosol, en calculant les instants d'activation et de désactivation des moyens (par exemple l'écran 33 ou le dispositif de dérivation 45) permettant d'interrompre temporairement la projection du flux d'aérosol sur le substrat 3.

On transmet ensuite, par l'unité de traitement, les données des trajectoires et des vitesses V1, V2 à une machine de Fabrication Assistée par Ordinateur (FAO)

On met en route le dispositif de projection, afin de générer le flux d'aérosol à travers la buse 31 et la machine de FAO, afin de mettre en mouvement des moyens de déplacements permettant de reproduire physiquement les trajectoires avec les vitesses V1, V2 et une distance buse/substrat fixe (d).

### Exemples de mise en oeuvre de l'invention

### Exemple 1

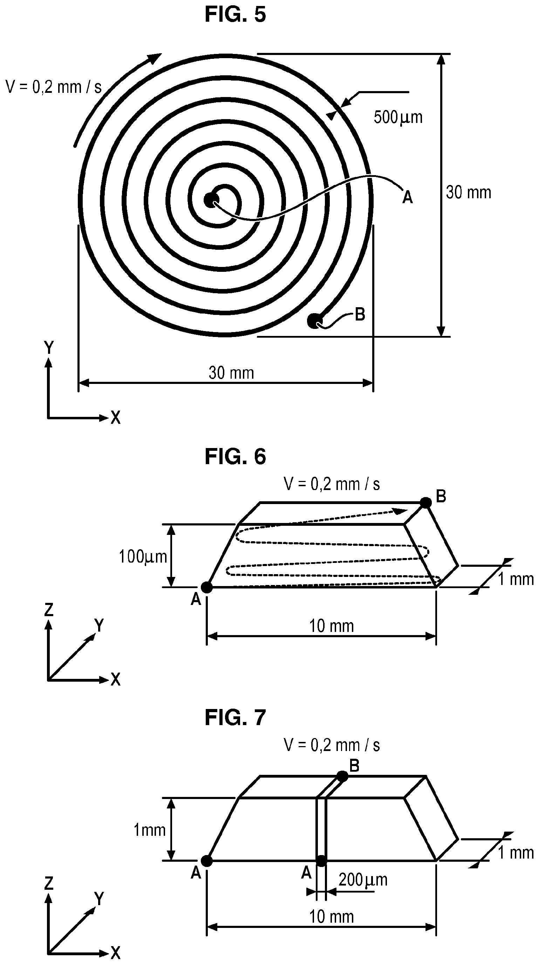

Dans cet exemple illustré à la figure 5, le substrat 3 est plan.

Le dépôt fabriqué est un motif en spirale caractérisé par une largeur de 500 µm, des dimensions maximales selon les axes X et Y de 30 mm et une épaisseur de 1 µm.

Le diamètre d'impact de l'aérosol est de 200 µm.

La vitesse V de déplacement de la buse 31 relativement au support 32 portant le substrat 3 est de 0,2 mm/s.

L'épaisseur de la couche élémentaire est égale à 1 µm.

La vitesse de croissance en épaisseur de la couche élémentaire est de 6 µm/min.

Le motif en spirale est fabriqué en continu, c'est-à-dire sans interrompre le flux d'aérosol 1'.

Le motif en spirale est fabriqué à partir d'une seule trajectoire reliant le point A et le point B, pilotée par le dispositif de pilotage.

La trajectoire du flux d'aérosol 1' projeté par la buse 31 est reproduite par les axes motorisés du dispositif de projection.

Les axes motorisés du dispositif de projection permettent des mouvements combinés selon les axes X et/ou Y et/ou Z et/ou θ et/ou ε, afin de reproduire le motif en spirale.

Pour obtenir une épaisseur de 1 µm avec les paramètres de projection ci-dessus, la trajectoire est reproduite 10 fois, alternativement du point A au point B et du point B au point A.

### Exemple 2

En référence à la figure 6, le dépôt fabriqué est un motif dont la section dans le plan (X, Z) est trapézoïdale sur un substrat plan dans le plan (X,Y), le motif étant caractérisé par des dimensions maximales selon les axes X et Y de 10 mm et 1 mm respectivement, et une épaisseur selon l'axe Z de 100 µm.

Le diamètre d'impact du flux d'aérosol est de 200 µm.

La vitesse V de déplacement de la buse 31 relativement au support 32 portant le substrat 3 est de 0,2 mm / s.

La vitesse de croissance en épaisseur de la couche est de 10 µm/min.

Le motif de section trapézoïdale est fabriqué en continu, c'est-à-dire sans interrompre le flux d'aérosol 1', à partir d'une seule trajectoire (en traits pointillés) reliant le point A et le point B.

La trajectoire du flux d'aérosol projeté par la buse 31 est reproduite par les axes motorisés du dispositif de projection.

Les axes motorisés du dispositif de projection permettent des mouvements combinés selon les axes X et/ou Y et/ou Z et/ou θ et/ou ε, afin de reproduire le motif trapézoïdal.

Dans cet exemple, les dimensions selon X, Y du dépôt diminuent lorsque l'épaisseur en Z augmente et ledit dépôt peut être obtenu sans l'utilisation d'un jeu de masques de dimensions décroissantes lorsque l'épaisseur augmente.

### Exemple 3

En référence à la figure 7, le substrat n'est pas plan mais présente une forme parallélépipédique avec une section rectangulaire dans le plan (X, Y) et une section trapézoïdale dans les plans (X, Z) et (Y, Z).

Les dimensions maximales du substrat sont respectivement: selon l'axe X: 10 mm, selon l'axe Y = 1 mm et selon l'axe Z : 1 mm.

Le dépôt fabriqué est une bande de 200 µm de largeur et de 1 µm d'épaisseur formée sur deux faces adjacentes du substrat.

Le diamètre d'impact du flux d'aérosol est de 200 µm.

La vitesse V de déplacement de la buse 31 relativement au support 32 portant le substrat 3 est de 0,2 mm/s.

La vitesse de croissance en épaisseur est de 6 µm/min.

De plus le dépôt est caractérisé par le fait que la trajectoire permettant de le fabriquer est caractérisée par la montée d'une marche.

Le motif en bande est fabriqué en continu, c'est-à-dire sans interrompre le flux d'aérosol 1', à partir d'une seule trajectoire reliant le point A et le point B.

La trajectoire du flux d'aérosol 1' projeté par la buse 31 est reproduite par les axes motorisés du dispositif de projection.

Les axes motorisés du dispositif de projection permettent des mouvements combinés selon les axes X et/ou Y et/ou Z et/ou θ et/ou ε, afin de reproduire le motif trapézoïdal.

Dans cet exemple, la distance entre la buse 31 et le substrat 3 est maintenue constante par un asservissement en Z du substrat 3 afin de fabriquer une bande de matière sur un substrat 3 non plan.

Si l'on souhaitait déposer plusieurs bandes parallèles sur le substrat, il conviendrait, après avoir déposé la première bande, d'interrompre temporairement la formation du dépôt, par exemple en déviant le flux d'aérosol ou en interposant un écran entre la buse et le substrat, pendant que l'on déplace la buse au droit de la seconde bande, puis reprendre la formation du dépôt une fois que la buse est correctement positionnée pour suivre la seconde trajectoire.

Une alternative serait, sans interrompre la projection de l'aérosol sur le substrat, d'accélérer sensiblement la vitesse relative de la buse par rapport au substrat entre l'emplacement de la première bande et celui de la seconde bande.

Il va de soi que les exemples mentionnés dans le présent texte sont donnés à titre purement illustratif et que l'invention n'est pas limitée à ces modes de réalisation particuliers.

### REFERENCES

- Jun Akedo, « Room Temperature Impact Consolidation of Fine Ceramic Powder by Aerosol Deposition Method and Applications to Microdevices », Journal of Thermal Spray Technology, Vol. 17(2), Juin 2008, pp. 181-198,
- P. Boch, "Propriétés et applications des céramiques", collection Mécanique et Ingénierie des Matériaux, Hermès Science Publications, 2001, ISBN 2-7462-0192-5.
- US 6,531,187.
- US 2011/0070359.
- US 2006/0222862
- US 7,479,464

## Revendications

1. Procédé de formation d'un dépôt d'un matériau fragile sur un substrat (3) par projection d'une poudre (1) dudit matériau, ledit procédé comprenant les étapes suivantes :
- la génération d'un aérosol contenant ladite poudre (1) dans une chambre dite d'aérosol (10),
- l'accélération de l'aérosol à travers une buse (31), dans une chambre (30) dite de dépôt en dépression par rapport à la chambre d'aérosol (10),
- la projection de l'aérosol sur le substrat (3), les grains constituant la poudre (1) se fragmentant et formant ledit dépôt lors de l'impact sur le substrat (3),
ledit procédé étant **caractérisé en ce que** l'on pilote la formation du dépôt à partir d'un modèle numérique tridimensionnel dudit dépôt à former, mis en oeuvre par tout logiciel de conception assisté par ordinateur, ladite formation comprenant les étapes suivantes :
- à partir d'un modèle numérique tridimensionnel du dépôt, la décomposition dudit modèle numérique en une pluralité de couches élémentaires à déposer successivement ;
- le calcul d'une pluralité de trajectoires relatives de la buse (31) et du substrat (3) permettant de reproduire chacune des couches élémentaires à déposer ;
- le recouvrement successif des couches élémentaires pour obtenir l'épaisseur de dépôt souhaitée.

2. Procédé selon la revendication 1, **caractérisé en ce que** l'épaisseur desdites couches élémentaires à déposer est définie en particulier en fonction des dimensions de l'impact du flux d'aérosol sur le substrat (3), de la vitesse de croissance (V1) de l'épaisseur du dépôt et de la vitesse de déplacement (V2) relative de la buse (31) par rapport au substrat (3) sur la trajectoire calculée pour déposer ladite couche élémentaire.

3. Procédé selon l'une des revendications 1 à 2, **caractérisé en ce que** l'aérosol est généré continument pendant la formation du dépôt.

4. Procédé selon la revendication 3, **caractérisé en ce que** l'on empêche temporairement le flux d'aérosol de frapper le substrat.

5. Procédé selon l'une des revendications 1 à 4, **caractérisé en ce que** le dépôt est constitué de plusieurs motifs distincts et **en ce que** pendant la trajectoire reliant deux motifs consécutifs, on dévie l'aérosol hors de la chambre (30) de dépôt.

6. Procédé selon l'une des revendications 1 à 4, **caractérisé en ce que** le dépôt est formé de plusieurs motifs distincts et **en ce que** pendant la trajectoire reliant deux motifs consécutifs, on projette l'aérosol sur un écran (33) interposé de façon dynamique entre la buse (31) et le substrat (3).

7. Procédé selon l'une des revendications 1 à 4, **caractérisé en ce que** le dépôt est formé de plusieurs motifs distincts et **en ce que** pendant la trajectoire reliant deux motifs consécutifs, on accélère le déplacement relatif de la buse (31) et du substrat (3).

8. Procédé selon l'une des revendications 1 à 7, **caractérisé en ce que** les couches élémentaires du dépôt sont réalisées successivement par une ou plusieurs buses (31) disposées les unes à côté des autres.

9. Procédé selon l'une des revendications 1 à 8, **caractérisé en ce que** l'on projette alternativement ou simultanément sur un ou plusieurs substrats (3) un ou plusieurs aérosols de plusieurs poudres différentes.

10. Procédé selon l'une des revendications 1 à 9, **caractérisé en ce que** le diamètre des grains de la poudre (1) est compris entre à 0,5 et 30 µm.

11. Procédé selon l'une des revendications 1 à 10, **caractérisé en ce que** la poudre (1) est une poudre céramique.

12. Procédé selon la revendication 11, **caractérisé en ce que** la poudre (1) comprend un matériau fragile choisi parmi l'oxyde d'aluminium, l'oxyde de zirconium, l'oxyde de silicium, l'oxyde de titane, l'oxyde de magnésium, l'oxyde de zinc, l'oxyde de fer, les oxydes de terres rares, l'oxyde de béryllium, l'oxyde de vanadium, l'oxyde de nobium, l'oxyde de tellure, l'oxyde de tungstène, l'oxyde de calcium, l'oxyde de cuivre, l'oxyde d'hafnium, l'oxyde mixte de calcium, cuivre et titane, l'oxyde mixte d'étain et d'indium, l'oxyde mixte d'aluminium et de magnésium, le titanate de baryum, le titanate de calcium, le titanate de strontium, le carbure de silicium, le carbure de titane, le carbure de tungstène, le carbure de bore, le carbure mixte de silicium et de titane, le carbure mixte d'aluminium et de titane, le nitrure d'aluminium, le nitrure de silicium, le nitrure de titane, le nitrure de bore, le nitrure mixte d'aluminium et de titane, les oxynitrures d'aluminium et de silicium (dopés ou non), l'hydroxyapatite, le phosphate tricalcique, le carbonate de magnésium, le carbonate de calcium, le carbonate de baryum, le silicate de magnésium, les aluminosilicates.

13. Dispositif de formation d'un dépôt d'un matériau fragile sur un substrat (3) par projection d'une poudre (1) dudit matériau, comprenant un dispositif de projection d'un aérosol contenant ladite poudre (1) sur ledit substrat (3), ledit dispositif de projection comprenant un dispositif (10, 11, 20) de génération dudit aérosol et une chambre (30) de dépôt comprenant un support (32) pour le substrat (3) et une buse (31) pour projeter ledit aérosol sur le substrat (3),
ledit dispositif étant **caractérisé en ce qu'**il comprend un dispositif de pilotage comprenant :
o des moyens de déplacement solidaires de la buse (31) et/ou du support (32) de manière indépendante selon trois directions orthogonales (X, Y, Z) et deux axes de rotations (θ, ε);
o une unité de traitement adaptée pour, à partir d'un modèle numérique tridimensionnel du dépôt à former, commander lesdits moyens de déplacement, ladite unité de traitement comprenant :
- un module de calcul, à partir dudit modèle tridimensionnel, de la décomposition du dépôt à former en une pluralité de couches élémentaires empilées ;
- un module de détermination d'une pluralité de trajectoires tridimensionnelles de projection de l'aérosol, pour chaque couche élémentaire ;
- un module d'établissement d'un ensemble de paramètres de projection de l'aérosol pour chaque trajectoire tridimensionnelle ;
- un module de commande desdits moyens de déplacements tridimensionnels indépendants et dudit dispositif de projection de l'aérosol.

14. Dispositif selon la revendication 13, **caractérisé en ce qu'**il comprend un moyen pour empêcher temporairement le flux d'aérosol (1') de frapper le substrat (3).

15. Dispositif selon la revendication 14, **caractérisé en ce que** ledit moyen comprend un écran (33) adapté pour être temporairement interposé entre la buse (31) et le substrat (3).

16. Dispositif selon la revendication 14, **caractérisé en ce que** ledit moyen comprend un dispositif de dérivation (45) pour dévier le flux d'aérosol (1') vers une chambre de dépôt additionnelle (30').

## Patentansprüche

1. Verfahren zum Bilden einer Ablagerung eines fragilen Materials auf einem Substrat (3) durch Sprühen eines Pulvers (1) des Materials, wobei das Verfahren die folgenden Schritte umfasst:
- das Erzeugen eines Aerosols, das das Pulver (1) enthält, in einer sogenannten Aerosolkammer (10),
- das Beschleunigen des Aerosols durch eine Düse (31) in einer sogenannten Ablagerungskammer (30), die in Bezug auf die Aerosolkammer (10) einen Unterdruck aufweist,
- das Sprühen des Aerosols auf das Substrat (3), wobei sich die Körner, die das Pulver (1) bilden, fragmentieren und die Ablagerung beim Aufprall auf das Substrat (3) bilden,
wobei das Verfahren **dadurch gekennzeichnet ist, dass** man das Bilden der Ablagerung ausgehend von einem dreidimensionalen digitalen Modell der zu bildenden Ablagerung steuert, umgesetzt durch eine beliebige computergestützte Konzeptionssoftware, wobei das Bilden die folgenden Schritte umfasst:
- ausgehend von einem dreidimensionalen digitalen Modell der Ablagerung, Aufschlüsselung des digitalen Modells in eine Vielfalt elementarer Schichten, die nacheinander aufzubringen sind;
- die Berechnung einer Vielzahl relativer Bahnen der Düse (31) und des Substrats (3), die es erlaubt, jede der aufzubringenden elementaren Schichten zu reproduzieren;
- das aufeinanderfolgende Abdecken der elementaren Schichten, um die gewünschte Ablagerungsstärke zu erhalten.

2. Verfahren nach Anspruch 1, **dadurch gekennzeichnet, dass** die Stärke der aufzubringenden elementaren Schichten insbesondere in Abhängigkeit von den Maßen des Aufpralls des Aerosolflusses auf dem Substrat (3), von der Aufwachsgeschwindigkeit (V1) der Stärke der Ablagerung und der relativen Verlagerungsgeschwindigkeit (V2) der Düse (31) in Bezug auf das Substrat (3) auf der berechneten Bahn, um die elementare Schicht abzulagern, definiert ist.

3. Verfahren nach einem der Ansprüche 1 bis 2, **dadurch gekennzeichnet, dass** das Aerosol kontinuierlich während der Bildung der Ablagerung erzeugt wird.

4. Verfahren nach Anspruch 3, **dadurch gekennzeichnet, dass** man vorübergehend den Aerosolfluss daran hindert, auf das Substrat aufzuprallen.

5. Verfahren nach einem der Ansprüche 1 bis 4, **dadurch gekennzeichnet, dass** die Ablagerung aus mehreren getrennten Mustern besteht, und dass man während der Bahn, die zwei aufeinanderfolgende Muster verbindet, das Aerosol aus der Ablagerungskammer (30) ablenkt.

6. Verfahren nach einem der Ansprüche 1 bis 4, **dadurch gekennzeichnet, dass** die Ablagerung aus mehreren getrennten Mustern besteht, und dass man während der Bahn, die zwei aufeinanderfolgende Muster verbindet, das Aerosol auf einen Schirm (33) sprüht, der dynamisch zwischen der Düse (31) und dem Substrat (3) eingefügt ist.

7. Verfahren nach einem der Ansprüche 1 bis 4, **dadurch gekennzeichnet, dass** die Ablagerung aus mehreren getrennten Mustern besteht, und dass man während der Bahn, die zwei aufeinanderfolgende Muster verbindet, die relative Verlagerung der Düse (31) und des Substrats (3) beschleunigt.

8. Verfahren nach einem der Ansprüche 1 bis 7, **dadurch gekennzeichnet, dass** die elementaren Schichten der Ablagerung nacheinander von einer oder mehreren Düsen (31), die nebeneinander angeordnet sind, ausgeführt werden.

9. Verfahren nach einem der Ansprüche 1 bis 8, **dadurch gekennzeichnet, dass** man abwechselnd oder gleichzeitig auf ein oder mehrere Substrate (3) ein oder mehrere Aerosole aus mehreren unterschiedlichen Pulvern sprüht.

10. Verfahren nach einem der Ansprüche 1 bis 9, **dadurch gekennzeichnet, dass** der Durchmesser der Körner des Pulvers (1) zwischen 0,5 und 30 µm liegt.

11. Verfahren nach einem der Ansprüche 1 bis 10, **dadurch gekennzeichnet, dass** das Pulver (1) ein Keramikpulver ist.

12. Verfahren nach Anspruch 11, **dadurch gekennzeichnet, dass** das Pulver (1) ein fragiles Material umfasst, das aus Aluminiumoxid, Zirkonoxid, Siliziumoxid, Titanoxid, Magnesiumoxid, Zinkoxid, Eisenoxid, den Oxiden seltener Erden, Berylliumoxid, Natriumoxid, Nobiumoxid, Telluroxid, Wolframoxid, Calciumoxid, Kupferoxid, Haffniumoxid, Mischoxid aus Calcium, Kupfer und Titan, Mischoxid aus Zinn und Indium, Mischoxid aus Aluminium und Magnesium, Bariumtitanat, Calciumtitanat, Strontiumtitanat, Siliziumkarbid, Titankarbid, Wolframkarbid, Borkarbid, Mischkarbid aus Silizium und Titan, Mischoxid aus Aluminium und Titan, Aluminiumnitrid, Siliziumnitrid, Titannitrid, Bornitrid, Mischnitrid aus Aluminium und Titan, Oxinitride aus Aluminium und Silizium (dotiert oder nicht), Hydroxyapatit, Tricalciumphosphat, Magnesium carbonat, Calciumcarbonat, Bariumcarbonat, Magnesiumsilikat, den Alumosilikaten ausgewählt ist.

13. Vorrichtung zum Bilden einer Ablagerung eines fragilen Materials auf einem Substrat (3) durch Sprühen eines Pulvers (1) des Materials, die eine Vorrichtung zum Sprühen eines Aerosols, das das Pulver (1) umfasst, auf das Substrat (3) umfasst, wobei die Sprühvorrichtung eine Vorrichtung (10, 11, 20) zum Erzeugen des Aerosols und eine Ablagerungskammer (30) umfasst, die einen Träger (32) für das Substrat (3) und eine Düse (31) zum Sprühen des Aerosols auf das Substrat (3) umfasst, wobei die Vorrichtung **dadurch gekennzeichnet ist, dass** sie eine Steuervorrichtung umfasst, die Folgendes umfasst:
∘ Mittel zum gemeinsamen Verlagern der Düse (31) und/oder des Trägers (32) unabhängig entlang von drei orthogonalen Richtungen (X, Y, Z) und zwei Rotationsachsen (θ, ε);
∘ eine Verarbeitungseinheit, die angepasst ist, um ausgehend von einem dreidimensionalen digitalen Modell der zu bildenden Ablagerung die Verlagerungsmittel zu steuern, wobei die Verarbeitungseinheit Folgendes umfasst:
- ein Modul, um ausgehend von dem dreidimensionalen Modell die Zusammensetzung der zu bildenden Ablagerung in einer Vielzahl gestapelter elementarer Schichten zu berechnen;
- ein Modul zum Bestimmen einer Vielzahl dreidimensionaler Bahnen zum Sprühen des Aerosols für jede elementare Schicht;
- ein Modul zum Erstellen einer Einheit von Sprühparametern des Aerosols für jede dreidimensionale Bahn;
- ein Modul zum Steuern der Mittel für unabhängige dreidimensionale Verlagerungen und der Sprühvorrichtung des Aerosols.

14. Vorrichtung nach Anspruch 13, **dadurch gekennzeichnet, dass** sie ein Mittel umfasst, um vorübergehend den Aerosolfluss (1') daran zu hindern, auf das Substrat (3) aufzutreffen.

15. Vorrichtung nach Anspruch 14, **dadurch gekennzeichnet, dass** das Mittel einen Schirm (33) umfasst, der angepasst ist, um vorübergehend zwischen die Düse (31) und das Substrat (3) eingefügt zu werden.

16. Vorrichtung nach Anspruch 14, **dadurch gekennzeichnet, dass** das Mittel eine Abzweigungsvorrichtung (45) umfasst, um den Aerosolfluss (1') zu einer zusätzlichen Ablagerungskammer (30') abzulenken.

## Claims

1. Method for forming a deposit of a fragile material on a substrate (3) by spraying a powder (1) of said material, said method comprising the following steps:
- the generation of an aerosol containing said powder (1) in a so-called aerosol chamber (10),
- the acceleration of the aerosol through a nozzle (31), in a so-called deposit chamber (30), at lower pressure compared to the aerosol chamber (10),
- the spraying of the aerosol onto the substrate (3), the grains forming the powder (1) being fragmented and forming said deposit upon impact on the substrate (3),
said method being **characterized in that** the forming of the deposit is controlled from a three-dimensional digital model of said deposit to be formed, implemented by any computer-assisted design software, said formation comprising the following steps:
- from a three-dimensional digital model of the deposit, the decomposition of said digital model into a plurality of elementary layers to be deposited in succession;
- the computation of a plurality of relative trajectories of the nozzle (31) and of the substrate (3) allowing each of the elementary layers to be deposited to be reproduced;
- the successive covering of the elementary layers to obtain the desired deposit thickness.

2. Method according to Claim 1, **characterized in that** the thickness of said elementary layers to be deposited is defined in particular as a function of the dimensions of the impact of the aerosol flow on the substrate (3), of the rate of growth (V1) of the thickness of the deposit and of the rate of relative displacement (V2) of the nozzle (31) in relation to the substrate (3) on the trajectory computed to deposit said elementary layer.

3. Method according to one of Claims 1 or 2, **characterized in that** the aerosol is generated continuously during the formation of the deposit.

4. Method according to Claim 3, **characterized in that** the aerosol flow is temporarily prevented from striking the substrate.

5. Method according to one of Claims 1 to 4, **characterized in that** the deposit consists of several distinct patterns and **in that**, during the trajectory linking two consecutive patterns, the aerosol is deflected out of the deposit chamber (30) .

6. Method according to one of Claims 1 to 4, **characterized in that** the deposit is formed by several distinct patterns and **in that**, during the trajectory linking two consecutive patterns, the aerosol is sprayed onto a screen (33) interposed dynamically between the nozzle (31) and the substrate (3).

7. Method according to one of Claims 1 to 4, **characterized in that** the deposit is formed by several distinct patterns and **in that**, during the trajectory linking two consecutive patterns, the relative displacement of the nozzle (31) and of the substrate (3) is accelerated.

8. Method according to one of Claims 1 to 7, **characterized in that** the elementary layers of the deposit are produced in succession by one or more nozzles (31) arranged alongside one another.

9. Method according to one of Claims 1 to 8, **characterized in that** one or more aerosols of several different powders are sprayed alternately or simultaneously onto one or more substrates (3).

10. Method according to one of Claims 1 to 9, **characterized in that** the diameter of the grains of the powder (1) lies between 0.5 and 30 µm,

11. Method according to one of Claims 1 to 10, **characterized in that** the powder (1) is a ceramic powder.

12. Method according to Claim 11, **characterized in that** the powder (1) comprises a fragile material chosen from among aluminium oxide, zirconium oxide, silicon oxide, titanium oxide, magnesium oxide, zinc oxide, iron oxide, the oxides of rare earths, beryllium oxide, vanadium oxide, nobium oxide, tellurium oxide, tungsten oxide, calcium oxide, copper oxide, hafnium oxide, mixed calcium, copper and titanium oxide, mixed tin and indium oxide, mixed aluminium and magnesium oxide, barium titanate, calcium titanate, strontium titanate, silicon carbide, titanium carbide, tungsten carbide, boron carbide, mixed silicon and titanium carbide, mixed aluminium and titanium carbide, aluminium nitride, silicon nitride, titanium nitride, boron nitride, mixed aluminium and titanium nitride, the oxynitrides of aluminium and of silicon (doped or not), hydroxyapatite, tricalcic phosphate, magnesium carbonate, calcium carbonate, barium carbonate, magnesium silicate, the aluminosilicates.

13. Device for forming a deposit of a fragile material on a substrate (3) by spraying a powder (1) of said material, comprising a device for spraying an aerosol containing said powder (1) on said substrate (3), said spraying device comprising a device (10, 11, 20) for generating said aerosol and a deposit chamber (30) comprising a support (32) for the substrate (3) and a nozzle (31) for spraying said aerosol on the substrate (3),
said device being **characterized in that** it comprises a control device comprising:
o displacement means secured to the nozzle (31) and/or to the support (32) independently according to three orthogonal directions (X, Y, Z) and two axes of rotation (θ, ε);
o a processing unit suitable for, from a three-dimensional digital model of the deposit to be formed, controlling said displacement means, said processing unit comprising:
- a module for computing, from said three-dimensional model, the decomposition of the deposit to be formed into a plurality of stacked elementary layers;
- a module for determining a plurality of three-dimensional aerosol spraying trajectories, for each elementary layer;
- a module for establishing a set of aerosol spraying parameters for each three-dimensional trajectory;
- a module for controlling said independent three-dimensional displacement means and said aerosol spraying device.

14. Device according to Claim 13, **characterized in that** it comprises a means for temporarily preventing the aerosol flow (1') from striking the substrate (3).

15. Device according to Claim 14, **characterized in that** said means comprises a screen (33) suitable for being temporarily interposed between the nozzle (31) and the substrate (3).

16. Device according to Claim 14, **characterized in that** said means comprises a deflection device (45) for deflecting the aerosol flow (1') to an additional deposit chamber (30').
